Europäisches Patentamt

European Patent Office

Office européen des brevets

(19)

(11) **EP 0 744 594 B1**

(12) **FASCICULE DE BREVET EUROPEEN**

(45) Date de publication et mention
de la délivrance du brevet:
**08.08.2001 Bulletin 2001/32**

(51) Int Cl.⁷: **G01C 19/72**

(21) Numéro de dépôt: **96401027.6**

(22) Date de dépôt: **10.05.1996**

(54) **Procédé de détection gyrométrique et gyromètre optique échantillonné pour la mise en oeuvre dudit procédé**

Verfahren zur gyrometrischer Drehratenbestimmung und optischer Kreisel zur Durchführung des Verfahrens

Method for measuring angular rotation and sampling optical gyroscope for carrying out this method

(84) Etats contractants désignés:
**DE GB**

(30) Priorité: **24.05.1995 FR 9506428**

(43) Date de publication de la demande:
**27.11.1996 Bulletin 1996/48**

(73) Titulaire: **SEXTANT AVIONIQUE (Société Anonyme)**
**78141 Velizy Villacoublay (FR)**

(72) Inventeur: **Chevalier, Jean-Réné**
**86100 Chatellerault (FR)**

(74) Mandataire: **de Saint-Palais, Arnaud Marie**
**CABINET MOUTARD**
**35 Rue de la Paroisse**
**BP 513**
**78005 Versailles Cedex (FR)**

(56) Documents cités:
**EP-A- 0 383 587**       **US-A- 4 514 088**
**US-A- 4 658 401**

**Description**

La présente invention a pour objet un procédé de détection gyrométrique et un gyromètre optique échantillonné pour la mise en oeuvre dudit procédé.

Elle concerne plus particulièrement un procédé mettant en oeuvre un gyromètre optique faisant intervenir un guide optique tel que, par exemple, une cavité résonante dans laquelle se propagent deux ondes de rayonnement laser circulant en sens opposé à savoir, une onde rotative et une onde contrarotative.

Dans un gyromètre classique de ce genre, les deux ondes circulent simultanément dans la cavité. Un circuit d'asservissement permet d'asservir simultanément ces deux ondes à la résonance. Divers moyens de mise en oeuvre permettent alors d'obtenir une représentation sous forme électrique de la différence des fréquences de résonance vues par chacune des ondes ; différence proportionnelle à la vitesse de rotation $\Omega$.

Il s'avère que la précision de ces gyromètres est limitée en raison de deux effets perturbants, à savoir : la "rétrodiffusion" et l'effet "Kerr".

En effet, une partie de l'onde rotative est rétrodiffusée et interfère avec l'onde contrarotative et vice-versa. Ce phénomène de rétrodiffusion engendre donc un bruit relativement important (jusqu'à $10^{6\circ}$/h).

Pour tenter de s'affranchir de ce phénomène de rétrodiffusion, de nombreux procédés conduisant à moduler l'une des deux ondes, afin de la décaler spectralement, ont été proposés. Toutefois, ces solutions se sont révélées coûteuses et assez lourdes à mettre en oeuvre.

L'effet "Kerr" résulte du fait que si l'intensité optique d'une onde est très élevée, l'onde tournant dans le sens opposé voit localement varier l'indice n du milieu où elle se propage. De ce fait, la longueur du chemin optique parcouru par cette onde varie et les données gyrométriques détectées se trouvent donc faussées.

Pour tenter de s'affranchir de l'effet Kerr, le brevet EP 0 383 587 fait intervenir un coupleur dont le rapport de couplage est variable et qui divise la lumière provenant du laser en deux composantes d'intensités sensiblement égales et un second coupleur qui transmet une fraction de la première composante à une entrée du résonateur à anneau et un troisième coupleur à taux variable pour coupler une proportion variable de la seconde composante à l'autre entrée du résonateur. Ce dispositif fait en outre intervenir des moyens de régulation complexes pour faire varier les rapports de couplage des coupleurs.

Il s'agit donc d'une solution complexe qui ne prend pas en compte les problèmes relatifs à la rétrodiffusion.

Le brevet US 4 658 401 décrit un gyrolaser à boucle résonante dans lequel pour maintenir indépendamment chacune des ondes en résonance, les fréquences des ondes rotatives et contrarotatives sont déphasées d'un montant égal et opposé de manière à maintenir les conditions de résonance.

L'invention a donc plus particulièrement pour but d'améliorer le gyromètre en s'affranchissant de ces deux effets précédemment évoqués.

Elle propose un procédé mettant en oeuvre un générateur d'ondes laser apte à émettre successivement dans un guide optique annulaire des trains d'ondes luminescents de deux types différents, à savoir : un train d'ondes rotatives et un train d'ondes contrarotatives, ainsi que des moyens de détection de l'intensité des ondes lumineuses se propageant dans le guide.

Selon l'invention, ce procédé comprend au moins une séquence comprenant les phases successives suivantes :

- une première phase au cours de laquelle on engendre dans le guide un premier train d'ondes modulées d'un premier type et on asservit la fréquence d'émission de ce train d'ondes à la fréquence de résonance de la cavité en agissant sur l'intensité du courant d'alimentation du générateur laser en fonction de l'intensité des ondes lumineuses détectées par les susdits moyens de détection et traitées par un démodulateur synchrone,
- une seconde phase au cours de laquelle on interrompt l'émission des ondes du premier type pendant un temps suffisant pour permettre à l'onde évanescente résultant de cette émission d'être complètement atténuée par le guide,
- une troisième phase au cours de laquelle on engendre dans le guide un train d'ondes modulées du second type en maintenant l'intensité du courant d'alimentation à la valeur qu'il avait à l'issue de la première phase et on élabore un signal gyroscopique à partir du signal délivré par le susdit détecteur au cours de cette troisième phase et démodulé par le susdit démodulateur,
- une quatrième phase au cours de laquelle on interrompt l'émission des ondes du second type pendant un temps suffisant pour permettre à l'onde évanescente résultant de cette émission, d'être complètement atténuée par le guide.

Il est clair que grâce à ces dispositions, un seul train d'ondes ne tourne en même temps dans le guide de sorte que l'on évite à la fois les effets négatifs de la rétrodiffusion et de l'effet "Kerr".

Bien entendu, la séquence précédemment définie pourra être répétée périodiquement, avec une période au moins égale à la durée cumulée des quatre phases de cette séquence.

Un gyromètre optique servant à la mise en oeuvre du procédé précédemment décrit pourra alors comprendre :

- un guide optique annulaire comportant deux coupleurs optiques situés en deux emplacements opposés et comprenant chacun une entrée destinée à recevoir un rayonnement lumineux incident, une sortie équipée d'un détecteur optoélectronique éventuellement commun, des moyens permettant de transférer dans le guide une fraction du rayonnement appliqué sur l'entrée et des moyens permettant de transférer sur la sortie une fraction du rayonnement se propageant à l'intérieur du guide tout en assurant la continuité de cette propagation à l'intérieur du guide,
- une source de rayonnement lumineux à fréquence commandable connectée aux entrées des deux coupleurs, par l'intermédiaire de deux interrupteurs optiques électriquement commandables, pilotés en alternance par une horloge d'échantillonnage de manière à obtenir une émission dans le guide d'une succession de trains d'ondes rotatifs et de trains d'ondes contrarotatifs,
- des moyens de modulation du rayonnement lumineux émis par la source,
- une boucle d'asservissement réglant la fréquence du rayonnement émis par la source en fonction de l'intensité détectée, des trains d'ondes émis par l'un des coupleurs et partiellement réfléchis sur la sortie de ce premier coupleur, de manière à accorder la fréquence de ce rayonnement à la fréquence de résonance dudit guide, et
- un circuit de mesure de l'intensité du rayonnement lumineux des trains d'ondes émis par le second coupleur et partiellement réfléchis sur la sortie de ce second coupleur, ce circuit de mesure comprenant des moyens permettant de délivrer un signal gyrométrique résultant du désaccord produit par une rotation du guide entre la fréquence du rayonnement et la fréquence de résonance.

Dans ce circuit, la boucle d'asservissement pourra comprendre un premier échantillonneur-bloqueur synchronisé par l'horloge d'échantillonnage de manière à effectuer, pendant les périodes d'émission du second coupleur, un blocage du signal délivré par le détecteur pendant l'émission des trains d'ondes par le premier coupleur.

Le circuit de mesure pourra lui-même comprendre un second échantillonneur-bloqueur synchronisé par l'horloge d'échantillonnage de manière à effectuer, pendant les périodes d'émission du premier coupleur, un blocage du signal délivré par le détecteur pendant l'émission des trains d'ondes par le second coupleur.

Un mode d'exécution de l'invention sera décrit ci-après, à titre d'exemple non limitatif, avec référence aux dessins annexés dans lesquels :

La figure 1 est un schéma de principe d'un gyromètre optique échantillonné selon l'invention ;

La figure 2 est une représentation schématique d'un guide optique équipé des deux coupleurs ;

La figure 3 est un diagramme représentatif des variations de la puissance émise par la diode laser utilisée dans le gyromètre de la figure 1, en fonction de sa tension d'alimentation $v$ ;

La figure 4 est un diagramme représentatif de la variation de la fréquence du rayonnement de la diode laser en fonction de sa tension d'alimentation ;

La figure 5 est un diagramme montrant la variation de l'intensité réfléchie normalisée du rayonnement présent à la sortie d'un coupleur en fonction de la phase (en radians), au voisinage de la résonance de la cavité.

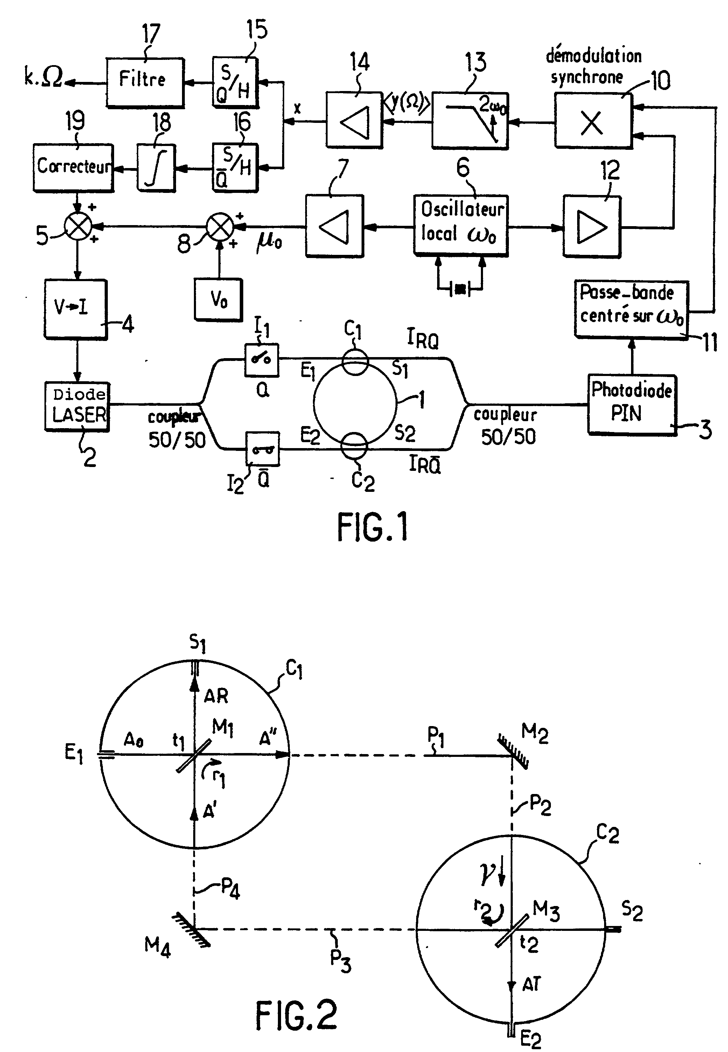

Dans l'exemple représenté schématiquement sur la figure 1, le guide optique du gyromètre a été représenté schématiquement sous la forme d'une cavité annulaire 1 comportant deux coupleurs optiques $C_1$, $C_2$ comprenant chacun une entrée $E_1$, $E_2$ reliée à la source d'émission de rayonnement laser 2 par l'intermédiaire d'un circuit optique comprenant un interrupteur optique commandable $I_1$, $I_2$ et une sortie réfléchie $S_1$, $S_2$ reliée à un détecteur optoélectronique 3.

Le principe de fonctionnement de ce guide optique et de ces coupleurs sera expliqué ci-après en référence à la figure 2 qui représente schématiquement un guide de forme carrée ou rectangulaire comprenant quatre parcours rectilignes $P_1$ à $P_4$ et quatre miroirs de renvois $M_1$ à $M_4$ qui s'étendent respectivement au niveau des quatre angles, perpendiculairement à leurs bissectrices.

Dans cet exemple, les coupleurs $C_1$, $C_2$ équipent deux angles droits opposés du guide et sont constitués par les miroirs $M_1$ et $M_3$. A cet effet, ces miroirs $M_1$ et $M_3$ sont semi-transmissifs pour des angles d'incidence de 45°. Pour une telle incidence, ils présentent un coefficient de réflexion $r_1$, $r_2$ et un coefficient de transmission $t_1$, $t_2$.

L'onde lumineuse Ao délivrée par la source 2, via l'interrupteur optique $I_1$ et qui est présente à l'entrée $E_1$, est projetée sur la face externe du miroir $M_1$, dans l'axe du parcours $P_1$. De ce fait, une fraction AR de cette onde est réfléchie vers la sortie $S_1$ du coupleur $C_1$, dans l'axe du parcours $P_4$ tandis qu'une autre fraction de cette onde A'' est transmise par le miroir $M_1$ dans l'axe du parcours $P_1$. Cette fraction A", réfléchie en quasi-totalité par le miroir $M_2$, se propage dans le parcours $P_2$ dans le sens (sens rotatif) et vient attaquer le miroir $M_3$ du coupleur $C_2$.

Une fraction de l'onde reçue par ce miroir $M_3$ est transmise vers l'entrée $E_2$ du coupleur $C_2$ (qui se trouve dans l'axe du parcours $P_2$) tandis qu'une autre fraction A' est réfléchie dans le parcours $P_3$. Après réflexion sur le miroir $M_4$, cette dernière fraction A' se propage dans le parcours $P_4$ et vient attaquer le coupleur $C_1$. Celui-ci transmet une nouvelle fraction de l'onde A' à sa sortie $S_1$ tandis qu'il réfléchit une fraction complémentaire dans le parcours $P_1$.

L'application sur l'entrée $E_2$ du coupleur $C_2$ d'une onde lumineuse émanant de la source lumineuse 2 via l'interrupteur optique $I_2$ donne lieu à un processus similaire, l'onde se propageant alors en sens inverse dans le guide (sens contrarotatif). Ici aussi, une fraction de l'onde appliquée au coupleur est transmise à sa sortie $S_2$ après avoir fait un tour complet du guide.

Ce processus (dans le cas du coupleur $C_1$) est régi par le système d'équations suivantes :

$$AR = t_1 \, A' + r_1 \, Ao \qquad A'' = t_2 \, Ao + r_1 \, A'$$

$$A' = \gamma \, ej\varphi \, r_2 \, A'' \qquad AT = \sqrt{\gamma \, ej\varphi} \cdot t_2 \, A''$$

équations dans lesquelles :

Ao  est l'amplitude de l'onde appliquée à l'entrée $E_1$ du coupleur $C_1$
AR  est l'amplitude transmise sur la sortie $S_1$ par le coupleur $C_1$
A"  est l'amplitude de l'onde réfléchie dans le parcours $P_1$ par le coupleur $C_1$
A'  est l'amplitude de l'onde réfléchie dans le parcours $P_3$ par le coupleur $C_2$
AT  est l'amplitude de l'onde transmise vers l'entrée $E_2$ par le coupleur $C_2$
$\gamma$   est l'atténuation de l'onde dans le guide en amplitude/tours
$\varphi$   est le déphasage accumulé par l'onde après un tour de propagation

La résolution de ce système d'équations donne :

$$AR = Ao \cdot \frac{r_1 - r_2 \, \gamma \, ej\varphi}{1 - Z \, ej\varphi}$$

$$AT = Ao \cdot \frac{t_1 - t_2 \, \sqrt{\gamma \, ej\varphi}}{1 - Z \, ej\varphi}$$

A partir de l'amplitude AR on obtient l'intensité normalisée $\widetilde{IR}$ de l'onde réfléchie sur la sortie du coupleur.

$$\widetilde{IR} = \frac{\Delta \, IR}{Io} = 1 - \frac{K_1 \, [1 - (1 - K_2) \, \Gamma]}{1 + Z^2 - 2Z \, \cos \varphi}$$

Expression dans laquelle :

IT        est l'intensité réfléchie
Io        est l'intensité de l'onde appliquée à l'entrée du coupleur
$K_1$ et $K_2$    sont des constantes
$\Gamma =$        $\gamma^2$

La figure 5 qui montre les variations de l'intensité normalisée $\widetilde{IR}$ en fonction des variations de fréquence de l'onde, fait apparaître qu'à la fréquence de résonance du guide l'intensité normalisée $\widetilde{IR}$ passe par un minimum.

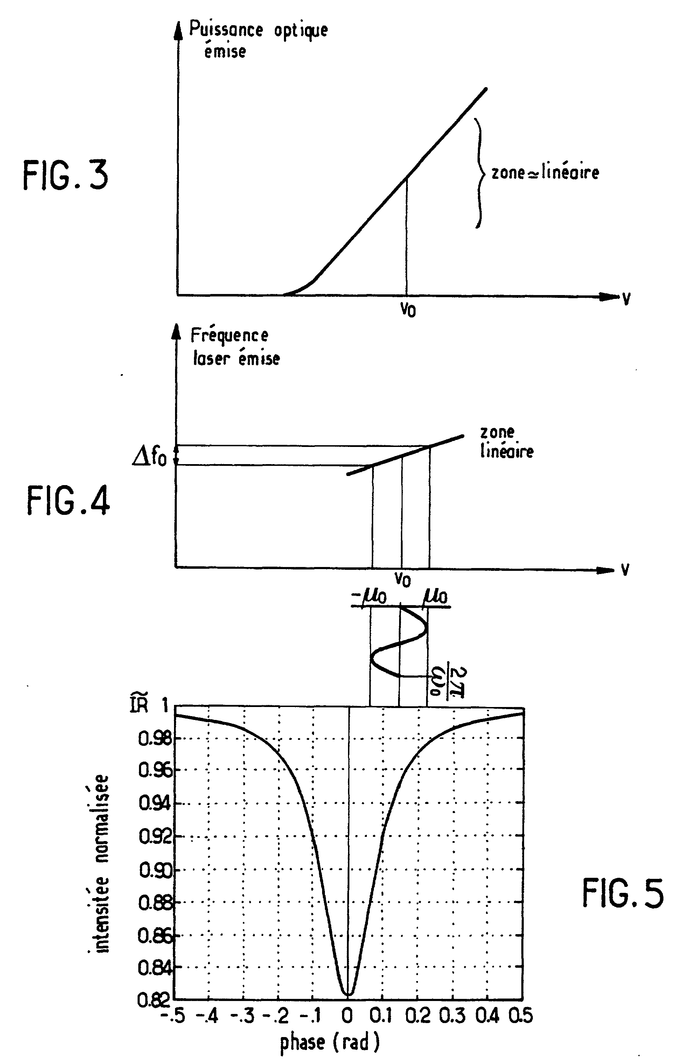

Les caractéristiques de la source émettrice de l'onde lumineuse sont indiquées sur les figures 3 et 4.

La figure 3 fait apparaître qu'une variation de la tension d'alimentation v de la source 2 (ici une diode laser) entraîne une variation sensiblement linéaire autour d'une valeur nominale vo.

De même, une variation telle que celle produite par une modulation autour de la tension nominale vo (par exemple du type $\mu_o \sin \omega\tau$) produit une variation $\Delta fo$ de la fréquence de l'onde lumineuse émise dans le guide.

L'invention se base plus particulièrement sur le fait qu'une modulation de la source 2 en intensité électrique se traduisant par une modulation de sa fréquence d'émission $\Delta fo$ est équivalente à une modulation $\Delta\varphi$ de la phase entre les ondes à l'entrée de la cavité et après un tour et, qu'en conséquence, il est possible de relier la vitesse de rotation $\Omega$ de la cavité à la fréquence de l'onde lumineuse correspondant à la résonance.

Ainsi, dans le cas où l'on utilise un guide optique de forme circulaire et de rayon Ro, la formule exprimant cette relation est de la forme :

$$\Delta fo = \frac{2Ro}{\lambda o\,\eta e}\,\Omega$$

expression dans laquelle :

$\lambda o$   est la longueur d'onde de l'onde émise par la source laser

$\eta e$   est l'indice effectif du mode guidé par la cavité.

L'invention utilise cette particularité pour engendrer un signal gyroscopique représentatif de la vitesse de rotation $\Omega$.

A cet effet, la source de rayonnement laser 2 est alimentée par un générateur de courant commandable en tension 4, par l'intermédiaire d'un additionneur 5 dont les deux entrées sont respectivement connectées à une boucle d'asservissement et à un générateur de tension d'alimentation fournissant une tension de la forme $v = vo + \mu_o \sin \omega\tau$. Cette modulation est obtenue grâce à un oscillateur local 6 dont la tension de sortie amplifiée par un amplificateur 7 est appliquée à l'une des entrées d'un additionneur 8 dont la deuxième entrée reçoit la tension vo.

La sortie du détecteur optoélectronique 3 qui consiste ici en une photodiode est reliée à un démodulateur synchrone 10 par l'intermédiaire d'un préamplificateur et d'un filtre passe-bande 11 centré sur la pulsation $\omega o$ de l'oscillateur local 6.

Le principe de la détection de la vitesse de rotation Q est alors le suivant :

Comme précédemment mentionné, l'expression de l'intensité réfléchie IR est de la forme :

$$IR = Io \left[ 1 - \frac{K_1\,[1 - (1 - K_2)\,r]}{1 + Z^2 - 2Z \cos \varphi} \right]$$

On utilise le développement limité suivant :

$$f(x) = \frac{1 - x^2}{1 - 2x \cos \theta + x^2} = 1 + \sum_{n=1}^{\infty} 2\,x^n \cos n\theta$$

En appliquant cela à la résonance du gyromètre optique intégré, on arrive à :

$$IR\,(\Delta\varphi) = Io \left\{ 1 - \frac{K_1\,[1 - (1 - K_2)\,\Gamma]}{1 - Z^2} \right\} - \frac{2K_1\,[1 - (1 - K_2)\,\Gamma]\,Io}{1 - Z^2} \cdot \sum_{n=1}^{\infty} Z^n \cos n\varphi$$

La diode laser est modulée à la fréquence

$$\tilde{f} = \frac{\tilde{\omega}}{2\pi}$$

avec la profondeur de modulation correspondant à une phase $\psi$. D'où :

$$\Delta\varphi = \varphi_2 = \psi \sin \tilde{\omega}t + \frac{8 \pi^2 Ro^2}{\lambda oC} \Omega$$

pour l'onde contrarotative, puisque l'on est asservi sur l'onde directe ($\varphi_1 = 0$).

Pour l'onde circulant dans l'anneau lors de la phase de mesure, on aura :

$$IR(\Omega) = Io\left\{ 1 - \frac{K_1 [1 - (1 - K_2)\Gamma]}{1 - Z^2} \right\} - \frac{2K_1 [1 - (1 - K_2)\Gamma] Io}{1 - Z^2} . \sum_{n=1}^{\infty} \left\{ Z^n \cos\left[ n\left(\psi \sin \tilde{\omega}t + \frac{8\pi^2 Ro^2}{\lambda oC}\Omega\right)\right]\right\}$$

Le cosinus peut être développé en fonction de Bessel et on obtient alors :

$$H_1(\Omega) = \left\{ \frac{4K_1 Io [1 - (1 - K_2)\Gamma]}{1 - Z^2} . \sum_{n=1}^{\infty} Z^n J_1(m\psi) \sin\left(\frac{8n \pi^2 Ro^2}{\lambda oC}\Omega\right)\right\} . \sin \tilde{\omega}t$$

formule dans laquelle $H_1(\Omega)$ est la composante de $IR(\Omega)$ portée par la pulsation $\tilde{\omega}$

La démodulation synchrone consiste ensuite à multiplier $H_1(\Omega)$ par $Ao \sin\tilde{\omega}t$, pour obtenir :

$$y(\Omega, t) \underset{=}{\Delta} A_1(\Omega) . \sin \tilde{\omega}t \times Ao \sin \tilde{\omega}t$$

et, en conséquence,

$$y(\Omega, t) = \frac{Ao}{2} A_1(\Omega) \left[ 1 - \cos 2\tilde{\omega}t \right]$$

Ce signal est transmis, par l'intermédiaire d'un filtre passe-bas 13, de fréquence de coupure « $2\tilde{\omega}$ et d'un amplificateur 14 à l'entrée de deux échantillonneurs-bloqueurs 15, 16 travaillant en opposition de phase, au rythme de la fréquence d'échantillonnage utilisé pour la commutation des interrupteurs optiques $I_1$, $I_2$.

En fait, le filtre 13 permet de réjecter le signal en $2\tilde{\omega}$ de $y(\Omega, t)$ et d'obtenir un signal de la forme :

$$\langle y(\Omega) \rangle = \frac{Ao}{2} A_1(\Omega) = \frac{2AoIoK_1 \left[ 1 - (1 - K_2) \Gamma \right]}{1 - Z_2} \cdot \sum_{n=1}^{\infty} Z^n J_1(n\psi) \sin\left( \frac{8\pi Ro^2 n}{\lambda oC} \Omega \right)$$

La sortie de l'échantillonneur-bloqueur 15 qui est rythmé en synchronisme avec l'interrupteur optique $I_1$, délivre à sa sortie un signal analogique qui, une fois filtré (filtre 17) est représentatif de la vitesse de rotation $\Omega$ du gyromètre (S = K$\Omega$).

La sortie de l'échantillonneur-bloqueur 16 est, quant à elle, transmise à la deuxième entrée de l'additionneur 5 par l'intermédiaire d'un intégrateur 18 et d'un réseau correcteur 19.

Le pilotage des interrupteurs optiques $I_1$, $I_2$ et des échantillonneurs-bloqueurs 15, 16 est assuré au moyen d'une horloge biphasée non recouvrante délivrant alternativement un signal Q et un signal complémentaire $\bar{Q}$, à une fréquence telle, qu'au cours de chaque période, l'onde évanescente présente dans la cavité puisse s'éteindre quasi-totalement.

Le fonctionnement du dispositif précédemment décrit est alors le suivant :

Au cours d'une première phase $ph_1$, le signal $\bar{Q}$ est au niveau logique 1, tandis que le signal Q est au niveau logique 0. De ce fait, l'interrupteur optique $I_2$ est fermé et transmet le rayonnement de la source 2 au coupleur $C_1$, tandis que l'interrupteur optique $I_1$ est ouvert.

Pendant cette première phase $ph_1$, l'onde transmise par le coupleur $C_2$ circule dans le guide dans le sens contrarotatif. L'intensité lumineuse détectée par le détecteur 3 est filtrée et démodulée et transmise après démodulation, via l'échantillonneur-bloqueur 16 qui se trouve en phase échantillonnage, à l'entrée de l'additionneur 5, par l'intermédiaire de l'intégrateur 18 et du réseau correcteur 19. L'échantillonneur-bloqueur 15 est alors à l'état bloqué et délivre la tension qu'il avait à la fin de sa phase d'échantillonnage précédente.

La boucle de régulation mettant en oeuvre le détecteur 3, le démodulateur 10, les filtres 11 et 13, l'amplificateur 14, l'échantillonneur-bloqueur 16, l'intégrateur 18, le réseau correcteur 19 et l'additionneur 5, agit de manière à régler l'intensité du courant d'alimentation de la source et, en conséquence, la fréquence de l'onde émise, jusqu'à ce que la tension x à la sortie de l'amplificateur 14 passe par un minimum. L'annulation de cette tension x signifie que la fréquence d'émission de l'onde lumineuse engendrée par la source 2 correspond à la fréquence de résonance quelle que soit la vitesse de rotation $\Omega$.

Compte tenu du fait que durant cette phase $ph_1$ une seule onde est présente dans le guide, on évite toute perturbation due à la rétrodiffusion et à l'effet "Kerr".

Au cours d'une seconde phase $ph_2$, les signaux Q et $\bar{Q}$ sont amenés au niveau logique 0. La durée de cette phase est prévue de manière à permettre à l'onde résiduelle de s'évanouir dans la cavité. Au cours de cette phase $ph_2$ les deux échantillonneurs 15, 16 sont à l'état bloqué et conservent respectivement les valeurs qu'ils avaient à la fin de leurs périodes d'échantillonnage précédentes respectives. Cette phase est de durée très faible.

Au cours d'une troisième phase $ph_3$, le signal $\bar{Q}$ est porté au niveau logique 0, tandis que le signal Q est porté au niveau logique 1. De ce fait, pendant cette période, l'interrupteur optique $I_2$ est ouvert, tandis que l'interrupteur optique $I_1$ est fermé et transmet le rayonnement de la source au coupleur $C_1$.

Pendant cette troisième phase, l'onde transmise par le coupleur $C_1$ qui ne se trouve pas à la fréquence de résonance si $\Omega \neq 0$, circule dans le guide dans le sens rotatif. L'intensité lumineuse détectée par le détecteur 3 est transmise après filtrage, amplification et démodulation à l'échantillonneur-bloqueur 15 qui se trouve en phase d'échantillonnage. Le signal S délivré par cet échantillonneur-bloqueur 15 est alors proportionnel à la vitesse de rotation éventuelle du gyromètre (ce signal est dû au désaccord $\Delta fo$ engendré par la vitesse de rotation $\Omega$ du gyromètre).

Il convient de remarquer qu'ici également, une seule onde (rotative) circule dans la cavité de sorte qu'on évite également les effets de la rétrodiffusion et l'effet "Kerr".

Au cours d'une quatrième phase $ph_4$, les signaux Q et $\bar{Q}$ sont amenés au niveau logique 0 de la même façon pour les mêmes raisons et pendant une première période que la phase 2.

A l'issue de cette quatrième phase, le dispositif entame une nouvelle séquence commençant par une nouvelle phase $ph_1$ et ainsi de suite.


**Revendications**

1. Procédé pour la détection gyrométrique, ce procédé mettant en oeuvre un générateur d'ondes laser (2) apte à émettre successivement dans un guide optique annulaire (1) des trains d'ondes luminescents de deux types différents, à savoir : un train d'ondes rotatives et un train d'ondes contrarotatives, ainsi que des moyens de détection (3) de l'intensité des ondes lumineuses se propageant dans le guide (1),
caractérisé en ce qu'il comprend au moins une séquence comprenant les phases successives suivantes :

- une première phase ($ph_1$) au cours de laquelle on engendre dans le guide (1) un premier train d'ondes modulées d'un premier type et on asservit la fréquence d'émission de ce train d'ondes à la fréquence de résonance de la cavité en agissant sur l'intensité du courant d'alimentation du générateur laser (2) en fonction de l'intensité des ondes lumineuses détectées par les susdits moyens de détection (3) et traitées par un démodulateur synchrone (10),
- une seconde phase ($ph_2$) au cours de laquelle on interrompt l'émission des ondes du premier type pendant un temps suffisant pour permettre à l'onde évanescente résultant de cette émission d'être complètement atténuée par le guide (1),
- une troisième phase ($ph_3$) au cours de laquelle on engendre dans le guide un train d'ondes modulées du second type en maintenant l'intensité du courant d'alimentation du générateur (2) à la valeur qu'il avait à l'issue de la première phase et on élabore un signal gyroscopique à partir du signal délivré par le susdit détecteur (3) au cours de cette troisième phase et démodulé par le susdit démodulateur,
- une quatrième phase ($ph_4$) au cours de laquelle on interrompt l'émission des ondes du second type pendant un temps suffisant pour permettre à l'onde évanescente résultant de cette émission, d'être complètement atténuée par le guide (1).

2. Procédé selon la revendication 1,
caractérisé en ce que l'asservissement de la fréquence du train d'ondes du premier type est obtenu au moyen d'une boucle d'asservissement effectuant un échantillonnage-blocage du signal démodulé et filtré, et l'intégration du signal échantillonné-bloqué, la période d'échantillonnage correspondant à la période d'émission des trains d'ondes du premier type, et en ce que le signal gyrométrique est obtenu par échantillonnage-blocage du signal démodulé et filtré, la période d'échantillonnage correspondant à la période d'émission du train d'ondes du second type.

3. Dispositif pour la mise en oeuvre du procédé selon l'une des revendications précédentes,
caractérisé en ce qu'il comprend :

- un guide optique annulaire (1) comportant deux coupleurs optiques ($C_1$, $C_2$) situés en deux emplacements opposés et comprenant chacun une entrée ($E_1$, $E_2$) destinée à recevoir un rayonnement lumineux incident, une sortie ($S_1$, $S_2$) équipée d'un détecteur optoélectronique (3) éventuellement commun, des moyens permettant de transférer dans le guide (1) une fraction du rayonnement appliqué sur l'entrée ($E_1$, $E_2$) et des moyens permettant de transférer sur la sortie ($S_1$, $S_2$) une fraction du rayonnement se propageant à l'intérieur du guide (1) tout en assurant la continuité de cette propagation à l'intérieur du guide (1),
- une source de rayonnement lumineux (2) à fréquence commandable connectée aux entrées ($E_1$, $E_2$) des deux coupleurs ($C_1$, $C_2$), par l'intermédiaire de deux interrupteurs optiques ($I_1$, $I_2$) électriquement commandables, pilotés en alternance par une horloge d'échantillonnage de manière à obtenir une émission dans le guide (1) d'une succession de trains d'ondes rotatifs et de trains d'ondes contrarotatifs,
- des moyens de modulation (6, 7, 8) du rayonnement lumineux émis par la source (2),
- une boucle d'asservissement (16, 18, 19, 5) réglant la fréquence du rayonnement émis par la source (2) en fonction de l'intensité détectée, des trains d'ondes émis par l'un des coupleurs ($C_2$) et partiellement réfléchis sur la sortie ($S_1$) de ce premier coupleur ($C_2$), de manière à accorder la fréquence de ce rayonnement à la fréquence de résonance dudit guide (1), et
- un circuit de mesure (10, 13, 14, 15, 17) de l'intensité du rayonnement lumineux des trains d'ondes émis par le second coupleur ($C_1$) et partiellement réfléchis sur la sortie de ce second coupleur ($C_1$), ce circuit de mesure comprenant des moyens permettant de délivrer un signal gyrométrique résultant du désaccord produit par une rotation du guide (1) entre la fréquence du rayonnement et la fréquence de résonance.

4. Dispositif selon la revendication 3,
[2] caractérisé en ce que le susdit circuit de mesure comprend, connectés à la sortie du détecteur (3), un démodulateur synchrone (10), un filtre passe-bas (13), un amplificateur (14) et un premier échantillonneur-bloqueur (15) dont la période d'échantillonnage correspond à la période d'émission des trains d'ondes du premier type, cet échantillonneur-bloqueur (15) délivrant le susdit signal gyrométrique.

5. Dispositif selon l'une des revendications 3 et 4,
caractérisé en ce que les susdits moyens de modulation comprennent un oscillateur local (6) servant à moduler une tension de polarisation (vo) à laquelle est ajoutée une tension de correction émanant de la boucle d'asservissement (16, 18, 19), en ce que le signal

## Patentansprüche

1. Verfahren zur Kreiseldetektion, wobei dieses Verfahren mit einem Laserwellengenerator (2), der in der Lage ist, nacheinander in einem ringförmigen optischen Leiter (1) Lichtwellenzüge zweier unterschiedlicher Arten auszusenden, nämlich: einen Zug sich drehender Wellen und einen Zug sich gegenläufig drehender Wellen, sowie mit Mitteln (3) zur Detektion der Intensität der sich in dem Leiter (1) ausbreitenden Lichtwellen arbeitet, adurch gekennzeichnet, daß es mindestens eine Sequenz umfaßt, welche die nachstehenden aufeinanderfolgenden Phasen aufweist:

   - eine erste Phase ($ph_1$), in deren Verlauf man in dem Leiter (1) einen ersten Zug modulierter Wellen einer ersten Art erzeugt und die Sendefrequenz dieses Wellenzuges der Eigenresonanzfrequenz des Hohlraums unterordnet, indem man auf die Intensität des Versorgungsstroms des Lasergenerators (2) in Abhängigkeit von der Intensität der von den Detektionsmitteln (3) detektierten und von einem synchronen Demodulator (10) verarbeiteten Lichtwellen einwirkt,
   - eine zweite Phase ($ph_2$), in deren Verlauf man das Senden der Wellen der ersten Art während eines Zeitraums unterbricht, der ausreicht, damit die verschwindende Welle, die aus diesem Sendevorgang resultiert, durch den Leiter (1) vollständig gedämpft werden kann,
   - eine dritte Phase ($ph_3$), in deren Verlauf man in dem Leiter einen Zug modulierter Wellen der zweiten Art erzeugt, wobei man die Intensität des Versorgungsstroms des Generators (2) bei dem Wert hält, den er zu Beginn der ersten Phase hatte, und, ausgehend von dem durch den Detektor (3) im Laufe dieser dritten Phase gelieferten und vom Demodulator demodulierten Signal, ein Kreiselsignal erzeugt,
   - eine vierte Phase ($ph_4$), in deren Verlauf man das Senden der Wellen der zweiten Art während eines Zeitraums unterbricht, der ausreicht, damit die verschwindende Welle, die aus diesem Sendevorgang resultiert, durch den Leiter (1) vollständig gedämpft werden kann.

2. Verfahren nach Anspruch 1, dadurch gekennzeichnet, daß die Steuerung der Frequenz des Wellenzugs der ersten Art mittels eines Regelkreises erreicht wird, die eine Tastspeicherverstärkung des demodulierten und gefilterten Signals und die Integration des tastspeicherverstärkten Signals durchführt, wobei die Abtastdauer der Sendedauer der Wellenzüge der ersten Art entspricht, und daß das Kreiselsignal durch eine Tastspeicherverstärkung des demodulierten und gefilterten Signals erhalten wird, wobei die Abtastdauer der Sendedauer des Wellenzuges der zweiten Art entspricht.

3. Vorrichtung zur Durchführung des Verfahrens nach einem der vorhergehenden Ansprüche, dadurch gekennzeichnet, daß sie folgendes aufweist:

   - einen ringförmigen optischen Leiter (1) mit zwei Optikkopplem ($C_1$, $C_2$), die an zwei einander gegenüberliegenden Stellen angeordnet sind und jeweils einen Eingang ($E_1$, $E_2$), der dazu dient, eine Einfallslichtstrahlung zu empfangen, einen Ausgang ($S_1$, $S_2$), der mit einem gegebenenfalls gemeinsamen optoelektronischen Detektor (3) versehen ist, Mittel, welche die Übertragung eines Anteils der an den Eingang ($E_1$, $E_2$) angelegten Strahlung in den Leiter (1) gestatten, und Mittel zum Übertragen eines Anteils der sich im Inneren des Leiters (1) ausbreitenden Strahlung auf den Ausgang ($S_1$, $S_2$), wobei gleichzeitig die Fortsetzung dieser Ausbreitung im Inneren des Leiters (1) sichergestellt wird,
   - eine Lichtstrahlungsquelle (2) mit einer steuerbaren Frequenz, die an die Eingänge ($E_1$, $E_2$) der beiden Koppler ($C_1$, $C_2$) mittels zweier optischer Unterbrecher ($I_1$, $I_2$) verbunden ist, die elektrisch steuerbar sind und abwechselnd von einem Sampling-Taktgeber so gesteuert werden, daß man ein Senden einer Reihe von Zügen sich drehender Wellen und von Zügen sich gegenläufig drehender Wellen im Leiter (1) erreicht,
   - Mittel zur Modulation (6, 7, 8) der von der Quelle (2) gesendeten Lichtstrahlung,
   - einen Regelkreis (16, 18, 19, 5), der die Frequenz der von der Quelle (2) gesendeten Strahlung in Abhängigkeit von der detektierten Intensität der von einem der Koppler ($C_2$) gesendeten und teilweise auf den Ausgang ($S_1$) dieses ersten Kopplers ($C_2$) reflektierten Wellenzüge so regelt, daß die Frequenz dieser Strahlung auf die Eigenresonanzfrequenz des Leiters (1) abgestimmt wird, und
   - eine Schaltung (10, 13, 14, 15, 17) zum Messen der Intensität der Lichtstrahlen der vom zweiten Koppler ($C_1$) gesendeten und teilweise auf den Ausgang dieses zweiten Kopplers ($C_1$) reflektierten Wellenzüge, wobei diese Meßschaltung Mittel aufweist, mit denen ein Kreiselsignal geliefert werden kann, das von der Abweichung herrührt, die durch eine Drehung des Leiters (1) zwischen der Strahlungsfrequenz und der Eigenresonanzfrequenz erzeugt wird.

4. Vorrichtung nach Anspruch 3, dadurch gekennzeichnet, daß die an den Ausgang des Detektors (3) angeschlossene Meßschaltung einen synchronen Demodulator (10), einen Tiefpaßfilter (13), einen Verstärker (14) und einen ersten Tastspeicherverstärker (15) aufweist, dessen Abtastdauer der Sendedauer der Wellenzüge der ersten Art entspricht, wobei dieser Tastspeicherverstärker (15) das Kreiselsignal liefert.

5. Vorrichtung nach einem der Ansprüche 3 und 4, dadurch gekennzeichnet, daß die Modulationsmittel einen örtlichen Oszillator (6) aufweisen, der zum Modulieren einer Polarisationsspannung (vo) dient, zu der eine Korrekturspannung hinzugefügt wird, die vom Regelkreis (16, 18, 19) ausgeht, daß das Signal, das von dieser Zufügung resultiert, an eine spannungssteuerbare Stromquelle (4) angelegt wird, die den Laserwellen-Generator (2) versorgt, und daß der örtliche Oszillator (6) den synchronen Demodulator (10) steuert.

## Claims

1. A gyrometric detection method using a laser wave generator (2) capable of emitting successively, in an annular optical guide (1), luminescent wave trains of two different types, namely: one train of rotating waves and one train of counter-rotating waves, and a means for detecting (3) the intensity of the light waves propagating in the guide (1), characterized in that at least one sequence comprises the following successive phases:

   - a first phase ($ph_1$) during which there is generated in the guide (1) a first train of a first type of modulated waves, and the frequency of emission of this wave train is controlled by the resonance frequency of the cavity by acting on the intensity of the current supplying said laser generator (2) as a function of the intensity of the light waves detected by said detection means (3) and processed by a synchronous demodulator (10),
   - a second phase ($ph_2$) during which the emission of the first type of waves is interrupted for a period sufficiently long to enable the evanescent wave resulting from that emission to become completely attenuated by the guide (1),
   - a third phase ($ph_3$) during which there is generated, in the guide, a train of modulated waves of the second type while maintaining the intensity of the supply current (2) at the value it had after the first phase, and a gyroscopic signal is produced from the signal supplied by said detector (3) during this third phase and is demodulated by said demodulator,
   - a fourth phase ($ph_4$) during which the emission of waves of the second type is interrupted for a period sufficiently long to enable the evanescent wave resulting from that emission to become completely attenuated by the guide (1).

2. The method according to claim 1,
   characterized in that the frequency of the train of waves of the first type is controlled by means of a control loop performming a sampling and holding of the demodulated and filtered signal, and integration of the sampled and held signal, the sampling period corresponding to the period of emission of the wave trains of the first type, and wherein the gyrometric signal is obtained by sampling and holding of the demodulated and filtered signal, the sampling period corresponding to the period of emission of the train of waves of the second type.

3. A device for the implementation of the method according to one of the preceding claims,
   characterised in that it comprises :

   - an annular optical guide (1) comprising two optical couplers ($C_1$, $C_2$) situated in two opposite locations and each comprising an input ($E_1$, $E_2$) intended to receive incident light radiation, an output ($S_1$, $S_2$) equipped with an optoelectronic detector (3), possibly a common one, a means enabling a fraction of the radiation applied to the input ($S_1$, $S_2$) to be transferred into the guide (1), and a means enabling a fraction of the radiation propagating inside the guide to be transferred to the output, while ensuring that this propagation continues inside said guide (1),
   - a controllable-frequency light radiation source (2) connected to the inputs ($E_1$, $E_2$) of said two couplers ($C_1$, $C_2$) via two electrically-controllable optical switches ($I_1$, $I_2$) piloted alternately by a sampling clock so as to obtain emission, in said guide, of a succession of rotating wave trains and counter-rotating wave trains,
   - a means for modulating (6, 7, 8) the light radiation emitted by said source (2),
   - a control loop (16, 18, 19, 5) regulating the frequency of the radiation emitted by said source (2) as a function of the detected intensity of said wave trains emitted by one of said couplers ($C_2$) and partially reflected on the output of that first coupler, so as to syntonize the frequency of this radiation with the resonance frequency of said guide (1), and

- a circuit for measuring (10, 13, 14, 15, 17) the intensity of the light radiation of said wave trains emitted by said second coupler ($C_1$) and partially reflected at the output of this second coupler ($C_1$), this measuring circuit comprising a means enabling the supply of a gyrometric signal resulting from the mismatch produced by a rotation of the guide (1) between the frequency of the radiation and the frequency of the resonance.

4. The device as claimed in claim 3,
   characterised in that said measuring circuit comprises, connected to the output of the detector (3), a synchronous demodulator (10), a bandpass filter, an amplifier (14) and a first sample-and-hold circuit (15) whose sampling period corresponds to the period of emission of the wave trains of the first type, this sample-and-hold circuit (15) supplying said gyrometric signal.

5. The device as claimed in claim 3,
   characterised in that said modulating means comprises a local oscillator (6) serving to modulate a polarization voltage (vo) to which is added a compensating voltage coming from the control loop (16, 18, 19), wherein the signal resulting from this addition is applied to a voltage-controllable source (4) of current powering the laser wave (2) generator, and wherein said local oscillator (6) pilots said synchronous demodulator (10).

FIG.1

FIG.2

EP 0 744 594 B1

**FIG. 3**

Puissance optique émise

zone ≃ linéaire

$v_0$

v

**FIG. 4**

Fréquence laser émise

zone linéaire

$\Delta f_0$

$v_0$

v

$-\mu_0$    $\mu_0$

$\frac{2\pi}{\omega_0}$

**FIG. 5**

$\tilde{I_R}$

intensitée normalisée

phase (rad)

13